(19) **Europäisches Patentamt**

**European Patent Office**

**Office européen des brevets**

(11) **EP 0 838 261 B1**

(12) **EUROPÄISCHE PATENTSCHRIFT**

(45) Veröffentlichungstag und Bekanntmachung des Hinweises auf die Patenterteilung:
**22.12.2004 Patentblatt 2004/52**

(51) Int Cl.⁷: **B01J 23/26**

(21) Anmeldenummer: **97117559.1**

(22) Anmeldetag: **10.10.1997**

(54) **Verfahren zur Herstellung von geträgerten Chromkatalysatoren**

Process for the production of a supported chromium catalyst

Procédé de fabrication d'un catalyseur supporté à base de chromium

(84) Benannte Vertragsstaaten:
**AT BE DE FR GB IT NL**

(30) Priorität: **22.10.1996 DE 19643512**

(43) Veröffentlichungstag der Anmeldung:
**29.04.1998 Patentblatt 1998/18**

(73) Patentinhaber: **Basell Polyolefine GmbH**
**50389 Wesseling (DE)**

(72) Erfinder:
• **Rosendorfer, Philipp, Dr.**
**67434 Neustadt (DE)**

• **Eck, Peter**
**67098 Bad Dürkheim (DE)**

(56) Entgegenhaltungen:
**EP-A- 0 186 174**    **WO-A-97/19963**
**GB-A- 1 604 708**    **US-A- 4 801 572**
**US-A- 5 006 506**

Bemerkungen:
Die Akte enthält technische Angaben, die nach dem Eingang der Anmeldung eingereicht wurden und die nicht in dieser Patentschrift enthalten sind.

**Beschreibung**

Gegenstand der vorliegenden Erfindung ist ein Verfahren zur Herstellung von geträgerten Chromkatalysatoren durch Beladung des Trägermaterials mit Chromverbindungen und Calcinierung bei Temperaturen zwischen 400°C und 1100°C.

Weiterhin sind Gegenstand der vorliegenden Erfindung geträgerte Chromkatalysatoren, erhältlich nach diesem Verfahren, sowie die Verwendung dieser Chromkatalysatoren zur Polymerisation von α-Olefinen.

Geträgerte Chromverbindungen sind als Katalysatoren zur Polymerisation von α-Olefinen seit langem bekannt (s. z.B. M.P.Mc Daniel, Adv. Cat 33, 47-98 (1985)). Die Herstellung solcher geträgerter Chromkatalysatoren erfolgt üblicherweise in zwei Stufen. In einem ersten Schritt wird das Trägermaterial zunächst mit einer löslichen Chromverbindung in einem geeigneten Lösungsmittel in Kontakt gebracht. Anschließend wird in einem zweiten Schritt das Gemisch aus Träger und Chromverbindung im Luft -oder Sauerstoffstrom bei hohen Temperaturen, etwa zwischen 400 und 1100°C, calciniert (s. z.B. US 5 363 915).

Von diesen geträgerten Chromkatalysatoren ist bekannt, daß sie während der Polymerisationsreaktion sehr leicht durch Katalysatorgifte inaktiviert werden können. In EP-A-0 640 625 wird z.B. beschrieben, daß es extrem wichtig ist, solche Katalysatorgifte, wie Feuchtigkeit, Sauerstoff, Kohlenmonoxid, Kohlendioxid und Acetylen, gründlich aus dem Polymerisationsgas zu entfernen und daß beispielsweise 2 ppm Kohlenmonoxid ausreichen, um die Polymerisation dramatisch zu beeinträchtigen.

Die Katalysator- und Polymereigenschaften werden wesentlich durch die Zusammensetzung des Trägers, die Trägerstruktur (Porenvolumen, mittlerer Porenradius usw.), die Calcinierungstemperatur und den Chromgehalt bestimmt. Hohe Molekulargewichte des Polymeren können z.B. durch niedrigere Calcinierungstemperatur erreicht werden, wobei sich allerdings eine oft unerwünschte Verbreiterung der Molmassenverteilung ergibt.

Aufgabe der vorliegenden Erfindung was es daher, ein Verfahren zur Herstellung von geträgerten Chromkatalysatoren zu finden, welches zu Katalysatoren führt, die die Herstellung von Polymeren mit großen Molekulargewichten und engen Molmassenverteilungen ermöglichen.

Demgemäß wurde ein Verfahren zur Herstellung von geträgerten Chromkatalysatoren, welche einen adsorbierten Wasseranteil von 0,05 bis 1,0 Gew.-%, bezogen auf Gesamtmasse des Katalysators enthalten, durch Beladung des Trägermaterials mit Chromverbindungen und Caclinierung bei Temperaturen zwischen 400 und 1100°C gefunden, welches dadurch gekennzeichnet ist, daß der Katalysator nach der Calcinierung mit einem (Gemisch bestehend aus Inert gas und Wasser) behandelt wird.

Weiterhin wurde ein geträgerter Chromkatalysator gefunden, welcher nach dem erfindungsgemäßen Verfahren erhältlich ist, sowie die Verwendung dieses geträgerten Chromkatalysators zur Polymerisation von α-Olefinen.

Die Beladung von Trägermaterialien mit löslichen Chromverbindung ist allgemein bekannt. Als Trägermaterialien eigenen sich besonders anorganische Verbindungen, insbesondere poröse Oxide wie $SiO_2$, $Al_2O_3$, MgO, $ZrO_2$, $TiO_2$, $B_2O_3$, CaO, ZnO oder Mischungen dieser Oxide. Die Trägermaterialien weisen vorzugsweise einen Teilchendurchmesser zwischen 1 und 300 μm, insbesondere von 30 bis 70 μm auf. Besonders bevorzugte Träger sind beispielsweise Kieselgele und Alumosilikatgele, bevorzugt solche der Formel $SiO_2 \cdot a\,Al_2O_3$, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Die Dotierung des Katalysatorträgers mit der chromhaltigen Aktivkomponente erfolgt vorzugsweise aus einer Lösung oder bei flüchtigen Verbindungen aus der Gasphase. Geeignete Chromverbindungen sind Chrom(VI)oxid, Chromsalze, wie z.B. Chrom(III)nitrat, Chrom(III)acetat, Komplexverbindungen, wie Chrom(III)acetylacetonat oder Chromhexacarbonyl, oder auch metallorganische Verbindungen des Chroms, wie Bis(cyclopentadienyl)chrom(II), organische Chrom(VI)säureester oder Bis(aren)chrom(0).

Zur Beladung des Trägers verfährt man im allgemeinen so, daß man das Trägermaterial in einem Lösungsmittel mit einer Chromverbindung in Kontakt bringt, das Lösungsmittel entfernt und den Katalysator bei einer Temperatur von 400 bis 1100°C calciniert. Das Trägermaterial kann dazu in einem Lösungsmittel oder auch in einer Lösung der Chromverbindung suspendiert werden.

Außer mit der chromhaltigen Aktivkomponente kann das Trägersystem noch mit weiteren Dotierstoffen beladen werden. Als solche Dotierstoffe kommen z.B. Verbindungen des Bors, des Fluors, des Aluminiums, des Siliciums, des Phosphors und des Titans in Betracht. Diese Dotierstoffe werden vorzugsweise gemeinsam mit den Chromverbindungen auf den Träger aufgebracht, können jedoch auch in einem getrennten Schritt vor oder nach der Chrombeladung auf den Träger aufgebracht werden.

Als Lösungsmittel für die Trägerdotierung eigenen sich beispielsweise Wasser, Alkohole, Ketone, Ether, Ester und Kohlenwasserstoffe.

Die Konzentration der Dotierlösung beträgt im allgemeinen 0,1 - 200 g Chromverbindung/l Lösungsmittel, bevorzugt 1 - 50 g/l.

Das Gewichtsverhältnis der Chromverbindungen zum Träger während der Beladung beträgt im allgemeinen von 0,001 : 1 bis 200 : 1, vorzugsweise von 0,005 : 1 bis 100 : 1.

Nach der Dotierung des Trägers wird die trockene Katalysatorvorstufe beispielsweise in einem Wirbelschichtreaktor in einer oxidierenden, sauerstoffhaltigen Atmosphäre bei Temperaturen zwischen 400 und 1100°C calciniert. Die Abkühlung erfolgt vorzugsweise unter einer Inertgasatmosphäre, um die Adsorption von Sauerstoff auszuschließen. Diese Calcinierung läßt sich auch in Gegenwart von Fluorverbindungen wie z.B. Ammoniumhexafluorosilikat ausführen, wodurch die Katalysatoroberfläche mit Fluoratomen modifiziert wird.

In einer bevorzugten Ausgestaltung des erfindungsgemäßen Verfahren wird die Calcinierung bei Temperaturen zwischen 500 und 800°C durchgeführt.

Nach der Abkühlung wird der geträgerte Katalysator mit einem wasserenthaltenden Inertgasgemisch behandelt. Als Inertgas eignet sich besonders Stickstoff, es können aber z.B. auch Edelgase wie Argon oder Mischungen solcher Inertgase eingesetzt werden.

Die Behandlung mit dem wasserenthaltenden Inertgasgemisch erfolgt im allgemeinen bei Temperaturen von 20 bis 100°C, vorzugsweise bei 30 bis 80°C.

Wie die Calcinierung kann auch die Behandlung mit dem wasserenthaltenden Inertgasgemisch z.B. in einem überwiegend unbeweglichen Schüttbett erfolgen. Vorzugsweise wird jedoch auch die letzere Behandlung in einem Wirbelbett durchgeführt.

Der gewählte Wasseranteil des Inertgases hängt von der Dauer der Behandlung sowie von der Temperatur ab. Bei geringem Wasseranteil erstreckt sich die Behandlung über einen längeren Zeitraum. Die Wahl dieser Parameter wird im allgemeinen so gewählt, daß der Wassergehalt des geträgerten Katalysators anschließend den gewünschten Wert erhält. Dies kann in wenigen Vorversuchen leicht ermittelt werden. Vorteilhaft wird die Anreicherung des Inertgases mit Wasser vorgenommen, indem man einen Inertgasstrom durch eine wasservorlage des gewünschten wasservolumens leitet, bis diese Wassermenge vollständig mitgeschleppt worden ist.

Erfindungsgemäße Chromkatalysatoren, welche einen adsorbierten Wasseranteil von 0,05 bis 1,0 Gew.-%, bezogen auf die Gesamtmasse des Katalysators, sind enthalten. Besonders bevorzugt ist ein adsorbierter Wasseranteil von 0,1 bis 0,7 Gew.-%, insbesondere von 0,2 bis 0,4 Gew.-%. Der Wassergehalt kann dabei durch Differenzthermogravimetrie ermittelt werden.

Die erfindungsgemäßen Katalysatoren führen bei Polymerisationsreaktionen von $\alpha$-Olefinen zu vergleichbaren Produktivitäten wie entsprechende unbehandelte Katalysatoren, die Polymerisate weisen dabei jedoch ein höheres Molekulargewicht sowie eine engere Molmassenverteilung auf. Zusätzlich wird durch die Wasserbehandlung die Rieselfähigkeit des Trägerkatalysators und damit die Dosierbarkeit deutlich verbessert.

Die erfindungsgemäßen Katalysatoren lassen sich vorteilhaft zur Polymerisation von $\alpha$-Olefinen einsetzen.

Der Druck beträgt bei diesen Polymerisationsverfahren im allgemeinen 100 bis 10000 kPa, vorzugsweise 1000 bis 6000 kPa und die Temperatur liegt im allgemeinen im Bereich von 10 bis 150°C, vorzugsweise im Bereich von 30 bis 125°C.

Die geträgerten Chromkatalysatoren eignen sich sehr gut für die Polymerisation und Oligomerisation von $\alpha$-Olefinen, vorzugsweise von $C_2$- bis $C_{10}$-Alk-1-enen wie Ethylen, Propen, 1-Buten, 1-Penten, 1-Hexen, 1-Hepten, 1-Octen, 1-Nonen oder 1-Decen.

Insbesondere kann Ethylen homopolymerisiert oder mit $C_3$- bis $C_{10}$-Alk-1-enen copolymerisiert werden, so zum Beispiel mit Propen, 1-Buten, 1-Hexen, 1-Octen oder 1-Decen oder Mischungen dieser Comonomeren, wobei das Mischungsverhältnis für die Wirksamkeit des Katalysators nicht kritisch ist.

Die Polymerisationen der Alk-1-ene können nach den üblichen, für die Polymerisation von Olefinen bekannten Verfahren, wie Lösungsverfahren, Suspensionsverfahren, gerührte Gasphase oder Gasphasenwirbelschichtverfahren, kontinuierlich oder auch diskontinuierlich, durchgeführt werden.

Besonders gut geeignet sind die Katalysatoren für Polymerisationen im Suspensionsverfahren und Gasphasenwirbelschichtverfahren.

Zur weiteren Steuerung der Molekulargewichte kann vorteilhaft Wasserstoff als Reglersubstanz bei der Polymerisation eingesetzt werden. Details dieser Regulationsmöglichkeit sind dem Fachmann bekannt.

Weiterhin hat es sich als vorteilhaft erwiesen, die Polymerisation in Gegenwart von metallorganischen Verbindungen durchzuführen. Geeignete metallorganische Verbindungen sind beispielsweise Alkyle der 1. und 2. Hauptgruppe des Periodensystems, sowie des Aluminiums. Besonders bevorzugte Metallverbindungen sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium. Diese metallorganischen Verbindungen werden üblicherweise in solchen Mengen eingesetzt, daß das molare Verhältnis ihrer Metallatome zum Chrom zwischen 1:0,01 und 1:100, bevorzugt zwischen 1:0,1 und 1:10, liegt.

Beispiele

Beispiel 1

Herstellung eines Trägerkatalysators:

100 g Kieselgel (Typ SG 332, Hersteller Grace, Worms, Porenvolumen: 1,7 ml/g, spezifische Oberfläche nach BET: 220 m$^2$/g) wurden in Stickstoffatmosphäre in 250 ml Methanol suspendiert. Zu dieser Suspension wurde eine Lösung von 2,3 g $Cr(NO_3)_3$ x $9H_2O$ in 80 ml Methanol gegeben. Diese Suspension wurde 10 min gerührt und dann durch Vakuumdestillation vom Lösungsmittel befreit. Anschließend wurde der Rückstand bei 600°C in einem Luftstrom-Wirbelbett für 10 Stunden calciniert. Die Abkühlung erfolgte durch Durchleiten von trockenem Stickstoff. Anschließend wurde bei 50°C wasserhaltiger Stickstoff durch das Wirbelbett geleitet, bis der Katalysator 0,3 Gew.-% Wasser absorbiert hatte.

Herstellung eines nicht erfindungsgemäßen Vergleichskatalysators:

Ein Vergleichskatalysator wurde wie in Beispiel 1 beschrieben, jedoch ohne abschließende Behandlung mit wasserhaltigem Stickstoff, hergestellt.

Beispiel 2

Polymerisation von Ethylen

Ein rührbarer 10 l-Druckautoklav wurde auf 95°C aufgeheizt und mehrmals mit Ethylen gespült. Unter Rühren wurden 500 ml Isobutan in den Reaktor eingebracht und Ethylen bis zu einem Druck von 40 bar aufgepreßt. Anschließend wurden über eine Druckschleuse 500 mg Katalysator und 90 mg Tri-n-hexylaluminium in den Autoklaven dosiert. Im Verlauf der Polymerisation wurde der Druck durch Ethylenzugabe konstant gehalten. Nach 90 min wurde die Polymerisation durch Entspannen des Reaktors abgebrochen. Die Ergebnisse zeigt die folgende Tabelle

| Katalysator | Produktaktivität [g/g] | $M_w$ [$10^3$] | $M_n$ [$10^3$] | $\frac{M_w}{M_n}$ | Viskosität [dl/g] | HLMI [g/10 min] |
|---|---|---|---|---|---|---|
| nach Bsp. 1 | 3500 | 715 | 36 | 20 | 6,7 | 0,2 |
| Vergleichskat | 3400 | 597 | 23 | 26 | 5,4 | 3,3 |

Das Beispiel zeigt, daß der erfindungsgemäße Katalysator zu einem Polymerisat mit höherem Molekulargewicht und engere Molekulargewichtsverteilung, ausgedrückt durch den Quotienten $M_w/M_n$, führt.

**Patentansprüche**

1. Verfahren zur Herstellung von geträgerten Chromkatalysatoren welche einen adsorbierten Wasseranteil von 0,05 bis 1,0 Gew.-%, bezogen auf die Gesamtmasse des Katalysators enthalten, durch Beladung des Trägermaterials mit Chromverbindungen und Calcinierung bei Temperaturen zwischen 400 und 1100°C, **dadurch gekennzeichnet, daß** der Katalysator nach der Calcinierung mit einem Gemisch bestehend aus Wasser und Inertgas behandelt wird.

2. Verfahren zur Herstellung von geträgerten Chromkatalysatoren nach Anspruch 1, **dadurch gekennzeichnet, daß** man als Trägermaterial $SiO_2$, $Al_2O_3$, $MgO$, $ZrO_2$, $TiO_2$, $B_2O_3$, $CaO$, $ZnO$ oder Mischungen dieser Oxide einsetzt.

3. Verfahren zur Herstellung von geträgerten Chromkatalysatoren nach Anspruch 1 oder 2, **dadurch gekennzeichnet, daß** man als Trägermaterial Kieselgel einsetzt.

4. Verfahren zur Herstellung von geträgerten Chromkatalysatoren nach den Ansprüchen 1 bis 3, **dadurch gekennzeichnet, daß** man die Calcinierung bei Temperaturen zwischen 500 und 800°C durchführt.

5. Verfahren zur Herstellung von geträgerten Chromkatalysatoren nach den Ansprüchen 1 bis 4, **dadurch gekennzeichnet, daß** man die Behandlung, mit dem wasserenthaltenden Inertgasgemisch in einer Gasphasenwirbelschicht vornimmt.

6. Verfahren zur Herstellung von geträgerten Chromkatalysatoren nach den Ansprüchen 1 bis 5, **dadurch gekennzeichnet, daß** man die Behandlung mit dem wasserenthaltenden Inertgasgemisch bei Temperaturen von 20 bis 100°C vornimmt.

7. Geträgerter Chromkatalysator, erhältlich nach einen Verfahren gemäß den Ansprüchen 1 bis 6.

8. Verwendung des geträgerten Chromkatalysators gemäß Anspruch 7 zur Polymerisation von $\alpha$-Olefinen.

## Claims

1. A process for preparing supported chromium catalysts which contain from 0.05 to 1.0% by weight of adsorbed water, based on the total mass of the catalyst by loading the support material with chromium compounds and calcining at from 400 to 1100°C, wherein the catalyst is treated with a mixture comprising water and inert gas after calcination.

2. A process for preparing supported chromium catalysts as claimed in claim 1, wherein the support material used is $SiO_2$, $Al_2O_3$, MgO, $ZrO_2$, $TiO_2$, $B_2O_3$, CaO, ZnO or mixtures of these.

3. A process for preparing supported chromium catalysts as claimed in claim 1 or 2, wherein the support material used is silica gel.

4. A process for preparing supported chromium catalysts as claimed in any of claims 1 to 3, wherein the calcination is carried out at from 500 to 800°C.

5. A process for preparing supported chromium catalysts as claimed in any of claims 1 to 4, wherein the treatment with the water-containing inert gas mixture is carried out in a gas-phase fluidized bed.

6. A process for preparing supported chromium catalysts as claimed in any of claims 1 to 5, wherein the treatment with the water-containing inert gas mixture is carried out at from 20 to 100°C.

7. A supported chromium catalyst obtainable by a process as claimed in any of claims 1 to 6.

8. The use of the supported chromium catalyst as claimed in claim 7 for the polymerization of $\alpha$-olefins.

## Revendications

1. Procédé pour la préparation de catalyseurs au chrome sur support, contenant, sur leur poids total, une proportion d'eau adsorbée de 0,05 à 1,0 % en poids, par charge de dérivés du chrome sur la matière de support et calcination à des températures de 400 à 1100°C, **caractérisé en ce que**, après la calcination, le catalyseur est traité par un mélange consistant en eau et gaz inerte.

2. Procédé pour la préparation de catalyseurs au chrome sur support selon la revendication 1, **caractérisé en ce que** l'on utilise, en tant que matière de support, $SiO_2$, $Al_2O_3$, MgO, $ZrO_2$, $TiO_2$, $B_2O_3$, CaO, ZnO ou un mélange de ces oxydes.

3. Procédé pour la préparation de catalyseurs au chrome sur support selon la revendication 1 ou 2, **caractérisé en ce que** la matière de support utilisée est un gel de silice.

4. Procédé pour la préparation de catalyseurs au chrome sur support selon les revendications 1 à 3, **caractérisé en ce que** la calcination est réalisée à des températures de 500 à 800°C.

5. Procédé pour la préparation de catalyseurs au chrome sur support selon les revendications 1 à 4, **caractérisé en ce que** le traitement par un mélange contenant de l'eau et un gaz inerte est réalisé en couche tourbillonnaire en phase gazeuse.

**6.** Procédé pour la préparation de catalyseurs au chrome sur support selon les revendications 1 à 5, **caractérisé en ce que** le traitement par un mélange contenant de l'eau et un gaz inerte est réalisé à des températures de 20 à 100°C.

**7.** Catalyseur au chrome sur support obtenu par un procédé selon les revendications 1 à 6.

**8.** Utilisation du catalyseur au chrome sur support selon la revendication 7 pour la polymérisation d'alpha-oléfines.